# EUROPEAN PATENT APPLICATION

(11) **EP 1 850 528 A1**
(43) Date of publication of application: **31.10.2007**
(21) Application number: 06290713.4
(22) Date of filing: 28.04.2006
(51) Int. Cl.: H04L 12/24, H04L 12/28

(54) **Configuration of subnetwork managers in a communication network**

(71) Applicant: Alcatel Lucent, 75008 Paris (FR)
(72) Inventor: Fiat, Lionel, 92380 Garches (FR)
(74) Representative: Richardt, Markus Albert

(57) **Abstract**

The invention discloses a method of interconnecting a first subnetwork manager and a second subnetwork manager of a communication network, the first subnetwork manager being associated with a first component, the second subnetwork manager being associated with the second component and the method comprises the steps of:
- sending a first message from the first subnetwork manager to the second subnetwork manager indirectly through first component and second component, wherein the first message comprises a first identifier by which the first component in its subnetwork manager is identifiable;
- receiving a second message from the second subnetwork manager at the first subnetwork manager indirectly through first component and second component, wherein the second message comprises a second identifier by which the second component in its subnetwork manager is identifiable.
- configuring the first subnetwork manager with the second identifier.

In other aspects the invention relates to an improved communication network, to a communication network component, to a communication subnetwork manager, and to a computer program product that is adapted to perform the method in accordance with the invention.

## Description

### Field of the invention

The invention relates to a method of interconnecting subnetwork managers of a communication network, to a communication network, to a communication network subnetwork manager and to a computer program product that is adapted to perform the method in accordance with the invention.

### Background and related art

A radio network controller (RNC) is the central node interfacing Node-Bs and the core network of a universal mobile telecommunications system (UMTS). As such, the radio network controller is the governing element in the UMTS radio access network (UTRAN) and responsible for the control of the Node-Bs. A Node-B corresponds to a base station in an UMTS network.

The radio network controller carries out radio resource management, some of the mobility management functions and is the point where encryption is done before user data is sent to and from the mobile station via a Node-B that is controlled by the radio network controller.

The radio network controller interfaces with the Node-Bs that are connected to it by use of the lub protocol. The lub protocol carries both user data and signaling data traffic.

A radio network controller is generally managed with a radio network controller subnetwork manager (RNC-SNM). The subnetwork manager of a radio network controller is usually implemented in software form. Thus it is a computer program by which the radio network controller can be managed/configured/operated. Furthermore, a Node-B is generally managed with a Node-B subnetwork manager (Node-B-SNM). The Node-B subnetwork manager is also usually a software component which is used to control the Node-B.

A Node-B and a radio network controller are interoperable with each other even when they are provided by different suppliers as they communicate over the standardized lub protocol. When a Node-B is connected to a radio network controller, the subnetwork manager of the Node-B has to be configured manually with the logical address of the radio network controller in the radio network controller subnetwork manager. Furthermore the subnetwork manager of the radio network controller has to be configured manually with the logical address of the Node-B in the Node-B subnetwork manager. The requirement of a manual configuration of the Node-Bs subnetwork manager and the subnetwork manager of the RNC is not only restricted to UMTS networks or to the context of the lub interface. For example in a communication network that employs the IEEE802.16 (WIMAX) standard, a Node-B corresponds to a base station and a radio network controller corresponds to a Wimax access controller (WAC). The Wimax access controller is also called Access Service Network Gateway (ASN-GW). The base stations as well as the Wimax access controller are provided each with a subnetwork manager. When a base station is connected to a WAC, the logical address of the base station in the BS subnetwork manager in the context of the IEEE 802.16 (WIMAX) standard has to manually be given to the subnetwork manager of the Wimax access controller, while the logical address of the Wimax access controller has to be manually configured in the subnetwork manager of the base station.

There is therefore a need for an improved method of interconnecting components of a communication network, for an improved communication network, for an improved communication network component and for a computer program product for performing the method in accordance with the invention.

### Summary of the invention

In accordance with an embodiment of the invention, there is provided a method of interconnecting a first and a second component of a communication network, wherein the first component is associated with a first subnetwork manager, wherein the second component is associated with a second subnetwork manager and wherein the method comprises the step of sending a first message from the first subnetwork manager to the second subnetwork manager, wherein the first message comprises a first identifier whereby the first component is identifiable by the first identifier. The method further comprises the step of receiving a second message from the second network manager at the first subnetwork manager, wherein the second message comprises a second identifier, whereby the second component is identifiable by the second identifier. Additionally the method comprises the step of configuring the first subnetwork manager with the second identifier.

The first identifier is thus sent in a first message from the first subnetwork manager to the second subnetwork manager, while the second identifier is received at the first subnetwork manager from the second subnetwork manager. The first identifier relates to the first component which is controlled by the first subnetwork manager. The first identifier can thus be used to identify the subnetwork manager of the first component. The second identifier relates to the second component which is controlled by the second subnetwork manager. The subnetwork manager of the second component is identifiable via the second identifier. The method in accordance with the invention is for example executed after connecting the first component and the second component or after upgrading one of the subnetwork managers of the first or of the second component or when moving/linking a first component to another third component. Thus, the first subnetwork manager receives the second identifier after the first and second components have been connected with each other or after the first or second subnetwork manager has been upgraded. An operator can access the first and the second subnetwork manager via a human-machine-interface (HMI). He can therefore immediately identify due to the configuration of the first subnetwork manager that the second component is connected to the first component as the first subnetwork manager has been configured with the second identifier and has possibly retrieved information directly in the second subnetwork manager.

As mentioned before, the first component and the second component are identifiable by the first or second identifier, respectively. The identification of the components by the corresponding identifiers is usually restricted to the scope of the first and second subnetwork managers. Thus, the subnetwork managers use the identifier for an identification of the components, and the components might also be identifiable by other identifiers that are employed by other components.

In the process of configuring the first subnetwork manager with the second identifier, the information about the second component that are already available to the first subnetwork manager are updated by the second identifier.

The method in accordance with the invention is particularly advantageous as the operator does not have to manually configure the first subnetwork manager with the second identifier since this second identifier is now received in the second message from the second subnetwork manager. Thus the first subnetwork manager is configured automatically with the second identifier after connecting the first and the second component or after updating the first subnetwork manager and/or the second subnetwork manager or when moving/linking a first component to another third component. Due to the automatic configuration, errors that result from the manual configuration of the subnetwork managers are avoided and time in setting up a communication network is saved. The setup and operation of a communication network becomes therefore more cost efficient.

In accordance with an embodiment of the invention the method further comprises the step of using the second identifier for further communication with the second component over the second subnetwork manager.

In accordance with an embodiment of the invention the first message and the second message are exchanged between the first subnetwork manager and the second subnetwork manager via the first component and the second component. The first subnetwork manager are connected to the first component by an interface, the second subnetwork manager is also connected to the second component by an interface, and the first component and said second component are connected by a standardized interface. A message that is sent from the first subnetwork manager to the second subnetwork manager is therefore passed via the interface to the first component by which it is transferred via the standardized interface to the second component by which it is further transferred to the second subnetwork manager. The use of a standardized interface has the advantage that the first component and the second component can be provided by two different suppliers. After connecting the two components it is ensured that the communication between the two components works as both can be adapted to communicate with the standardized interface.

In accordance with an embodiment of the invention the second message is received in response to the first message.

In accordance with an embodiment of the invention the method further comprises the step of sending a third message in response to the reception of the second message from the first subnetwork manager to the second subnetwork manager.

In accordance with an embodiment of the invention, the standardized interface is lub.

In accordance with an embodiment of the invention, the first, second and third messages are Node-B application part (NBAP) messages over lub.

In accordance with an embodiment of the invention, the first component is a Node-B, the second component is a radio network controller and the communication network is a universal mobile telecommunications network (UMTS-network).

In accordance with an embodiment of the invention, the first subnetwork manager is a subnetwork manager of a Node-B (Node-B-SNM) and the second subnetwork manager is a subnetwork manager of a radio network controller (RNC-SNM).

In accordance with an embodiment of the invention, the first identifier is a Node-B-SNM uniform resource locator or a non-standardized identifier such as, e.g. a Node-B-SNM-URL, wherein the second identifier is a radio network controller-SNM uniform resource locator or a non-standardized identifier (such as RNC-SNM-URL), wherein the first message is a Node-B application part (NBAP) resources indication message, wherein the first Node-B-SNM-URL is added to the NBAP resources indication message, wherein the second message is a NBAP cell setup message, and wherein the RNC-SNM-URL is added to the NBAP cell setup message. Logical addresses as mentioned in the introductory part that are exchanged by the first and the second component and by which the corresponding subnetwork managers are configured correspond here to uniform resource locators or non-standardized identifiers in the context of the lub protocol.

In accordance with an embodiment of the invention, the first identifier is a Node-B-uniform resource locator, the second identifier is a RNC-SNM-URL, the first message is a Node-B application part (NBAP) equipment status indication message. The NBAP equipment status indication message comprises the Node-B-SNM-URL and the second message is a NBAP equipment status response message that comprises the RNC-SNM-URL. The third message is an NBAP equipment status notification message.

In accordance with an embodiment of the invention the second component is a Node-B, and the first component is a radio network controller, wherein the second subnetwork manager is a Node-B subnetwork manager and wherein the first subnetwork manager is a radio network controller subnetwork manager, and wherein the mobile communication network is a universal mobile telecommunications network (UMTS network). Thus the meaning of the first component and the second component has been changed with respect to the sections above as the second component refers in this embodiment to a Node-B and the first component refers in this embodiment to a radio network controller.

In accordance with an embodiment of the invention, the standardized interface employs the Wimax Forum standard.

In accordance with an embodiment of the invention, the first component is a base station and the second component is a Wimax access controller (WAC) or vice versa of a communication network employing the Wimax Forum standard. Wimax access controllers are also referred to as Access Service Network Gateways (ASN-GW).

In accordance with an embodiment of the invention, the first, second and third messages are base station-WAC messages, whereby each of the first, second and the third message comprise the identifier relating to the base station in its subnetwork manager or to the WAC in its subnetwork manager.

In another aspect the invention relates to a method of interconnecting a first component and a second component of a mobile communication network, wherein the first component is associated with a first subnetwork manager, wherein the second component is associated with a second subnetwork manager and wherein the method comprises the steps of receiving a first message from the first subnetwork manager at the second subnetwork manager, wherein the first message comprises a first identifier by which the first component is identifiable in its subnetwork manager. The method further comprises the step of sending a second message from the second subnetwork manager to the first subnetwork manager, wherein the second message comprises a second identifier by which the second component is identifiable in its subnetwork manager and the step of configuring the second subnetwork manager with the first identifier. The method disclosed in this section can be seen as inverse to the method in accordance with the invention described in the preceding sections.

In another aspect the invention relates to a communication network component which comprises a first subnetwork manager and means for sending a first message to a second communication network component, wherein the first message comprises a first identifier by which the communication network component is identifiable in its subnetwork manager. The communication network component further comprises means for receiving a second message from the second communication network component, wherein the second message comprises a second identifier by which the second communication network component is identifiable in its subnetwork manager. The communication network component further comprises means for configuring the first subnetwork manager with the second identifier.

In accordance with an embodiment of the invention the communication network component further comprises means for sending a third message which comprises the first identifier.

In accordance with an embodiment of the invention the communication network component further comprises means for storing the second identifier.

In accordance with an embodiment of the invention the communication network component further comprises means for adding the second identifier to any further message that is sent to the second communication network component.

In accordance with an embodiment of the invention the communication network component as well as the second communication network component are comprised in a communication network. In accordance with an embodiment of the invention the communication network component is a subnetwork manager of a Node-B or of a radio network controller of an UMTS network.

In another aspect the invention relates to a communication network comprising a first component and a second component, a first subnetwork manager and a second subnetwork manager, wherein the first subnetwork manager is associated with the first component, wherein the second subnetwork manager is associated with the second component. The mobile communication network comprises further means for sending a first message from the first subnetwork manager to the second subnetwork manager, e.g. indirectly via the first component and the second component, wherein the first message comprises a first identifier by which the first component is identifiable in its subnetwork manager. The mobile communication network further comprises means for receiving a second message from the second subnetwork manager at the first subnetwork manager, wherein the second message comprises a second identifier by which the second component in its subnetwork manager is identifiable. The communication network further comprises means for receiving the first message and means for sending the second message. The communication network further has means for configuring the first subnetwork manager with the second identifier and means for configuring the second subnetwork manager with the first identifier.

In accordance with an embodiment of the invention, the communication network further comprises means for sending and receiving a third message.

In accordance with an embodiment of the invention the communication network further comprises a standardized interface which is employed for exchanging the first, second and third messages between the first and the second component.

In another aspect the invention relates to a computer program product that comprises computer executable instructions that are adapted to performing the steps of sending a first message from a first subnetwork manager of a first component of a communication network to a second subnetwork manager of a second component of the communication network, wherein the first message comprises a first identifier by which the first component is identifiable in its subnetwork manager and of receiving a second message from the second subnetwork manager at the first subnetwork manager, wherein the second message comprises a second identifier by which the second component is identifiable in its subnetwork manager. The instructions are further adapted to performing the steps of configuring the first subnetwork manager with the second identifier.

In accordance with an embodiment of the invention, the computer program product further comprises computer executable instructions that are adapted to performing the step of storing the second identifier.

In accordance with an embodiment of the invention the computer program product further comprises computer executable instructions that are adapted to performing the step of sending a third message in response to the reception of the second message.

In accordance with an embodiment of the invention the computer program product further comprises computer executable instructions that are adapted to performing the step of adding the second identifier to any further messages that are sent to the second component.

In another aspect the invention relates also to a computer program product that comprises computer executable instructions that are adapted to performing the step of receiving a first message from a first subnetwork manager of a first component of a communication network at a second subnetwork manager of a second component of the communication network, wherein the first message comprises a first identifier by which the first component is identifiable in its subnetwork manager. The instructions are further adapted to performing the steps of sending a second message from the second subnetwork manager to the first subnetwork manager, wherein the second message comprises a second identifier by which the second component in its subnetwork manager is identifiable. The instructions are further adapted to performing the steps of configuring the second subnetwork manager using the first identifier. The computer program product disclosed in this section can be seen as the inverse of the computer program product disclosed in the preceding section. As such this computer program product can be implemented in the second subnetwork manager while the computer program product disclosed above can be integrated into the first subnetwork manager. Alternatively the computer program product can be separate programs that run on the first component and on the second component, respectively.

### Brief description of the drawings

In the following preferred embodiments of the invention will be described in greater detail by way of example only making reference to the drawings in which:
- Figure 1: shows a block diagram of a communication network,
- Figure 2: shows a flow diagram of the basic steps performed by the method in accordance with the invention, and
- Figure 3: shows a block diagram of a human-machine-interface.

### Detailed description

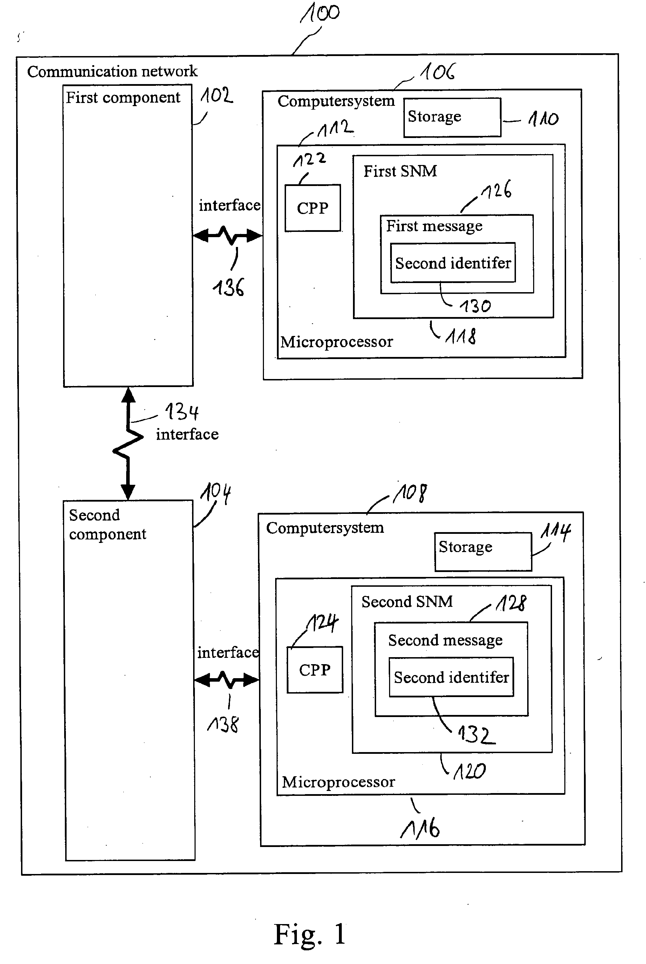

Fig. 1 shows a block diagram of a communication network 100. The communication network 100 comprises a first component 102, a second component 104, a computer system 106, and another computer system 108. The computer system 106 comprises a storage device 110 and a microprocessor 112. The computer system 108 comprises a storage device 114 and a microprocessor 116. The microprocessor 112 executes a first subnetwork manager 118. The first subnetwork manager 118 is a computer program product that is used to control the first component 102. The first subnetwork manager 118 is stored on the storage device 110 which is for example a hard disc drive and loaded into the microprocessor 112 when the computer system 106 is started up. The microprocessor 112 executes additionally a computer program product 122 which comprises instructions that are adapted to perform the method in accordance with the invention.

The microprocessor 116 executes a second subnetwork manager 120 and a second computer program product 124 that are for example loaded from the storage device 114 which can for example be a hard disc drive during the start up of the computer system 108 into the microprocessor 116. The second subnetwork manager 120 is employed for controlling the second component 104 and the second computer program product 124 comprises instructions for performing the method in accordance with the invention. The first subnetwork manager 118 and the second subnetwork manager 120 communicate via the first component 102 and the second component 104 with each other. The first component 102 is therefore connected via an interface 136 to the computer system 106 and via a standardized interface 134, e.g. an lub interface, to the second component 104. The second component 104 is furthermore connected via the interface 138 to the computer system 108. The interfaces 136 and 138 are usually non-standardized interfaces.

When the first component 102 and the second component 104 are connected, the first computer program product 122 sends via the interfaces 134, 136, and 138 and via the first component 102 and the second component 104 a first message 126 from the first subnetwork manager 118 to the second subnetwork manager 120. The first message 126 comprises a first identifier 130 by which the first component 102 is identifiable. The second computer program product 124 receives the first message 126, extracts the first identifier 130 from the first message and configures the second subnetwork manager 120 with the first identifier 130. Furthermore, the second computer program product 124 initiates the sending of a second message 128 from the second subnetwork manager 120 to the first subnetwork manager 118. The second message 128 comprises a second identifier 132 by which the second component 104 is identifiable. After reception of the second message 128, the first computer program product 122 extracts the second identifier 132 from the second message 128 and configures the first subnetwork manager 118 with the second identifier 128.

Due to the configuration of the first subnetwork manager 118 with the second identifier 132, the second component 104 is registered at the subnetwork manager 118 of the first component 102. Furthermore, due to the configuration of the second subnetwork manager 120 with the first identifier 130, the first component 102 is registered at the second subnetwork manager 120 of the second component 104. An operator or a supervisor of the communication network 100 can access the first and second subnetwork managers 118 and 120 via a human-machine-interface (not depicted in fig. 1). Due to the configuration/registration of the first and second components at the corresponding subnetwork managers, the supervisor or operator can immediately identify that the first and second components 102, 104 are registered at the other component's subnetwork manager 118 or 120.

The communication network 100 can be the UTRAN network of an UMTS network. The first component 102 can be a Node-B and the second component can be a radio network controller. The first subnetwork manager 118 is then a subnetwork manager of a Node-B and the second subnetwork manager is then a subnetwork manager of a radio network controller. After connection of the first component 102 to the second component 104, thus after connection of the Node-B and the radio network controller, the first message which corresponds to a Node-B application part equipment status indication message is sent from the Node-B to the RNCThe Node-B application part equipment status indication message comprises the Node-B-uniform resource locator and the message is sent over an interface 134 that corresponds to an lub interface. The message is received at the subnetwork manager 120 of the second component 104 which is the radio network controller. The Node-B-uniform resource locator is extracted from the first message and used to configure the second subnetwork manager 120, the subnetwork manager of the radio network controller. In response to the reception of the first message 120, the subnetwork manager of the radio network controller sends a second message 128 that corresponds to a Node-B application part equipment status response message to the Node-B. The second message 128 comprises the second identifier 132 that corresponds to the uniform resource locator of the radio network controller. The second message is received by the subnetwork component of the first component 102 and the uniform resource locator of the radio network controller is used to configure the first subnetwork manager 118. The subnetwork manager of the Node-B can further send a Node-B application part equipment status notification message in response to the reception of the Node-B application part equipment status indication message.

In the description of Fig. 1, the messages have been passed from one subnetwork manager to the other subnetwork manager over the associated components. The scope of the method in accordance with the invention is however more generic in the sense that also other network paths can be taken by the messages on the way from one subnetwork manager to the other subnetwork manager.

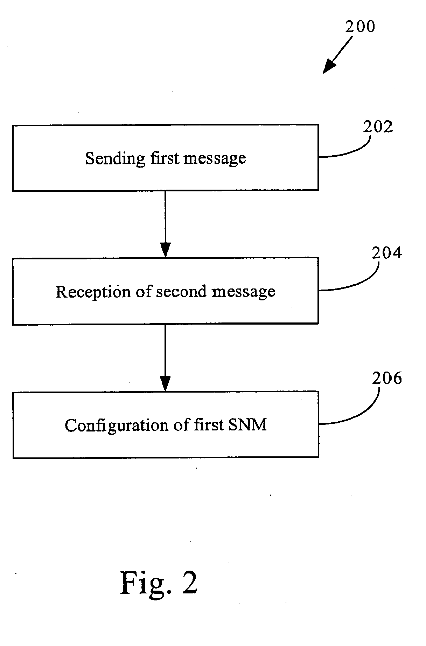

Fig. 2 shows a flow diagram 200 of the basic steps performed by the method in accordance with the invention. In step 202, the first message is sent from the first subnetwork manager to the second component, wherein the first message comprises a first identifier, wherein the first component is identifiable by the first identifier. In step 204 a second message is received from the second subnetwork manager at the first subnetwork manager, wherein the first message comprises a second identifier, wherein the second component is identifiable by the second identifier. In step 206 the first subnetwork manager is configured with the second identifier.

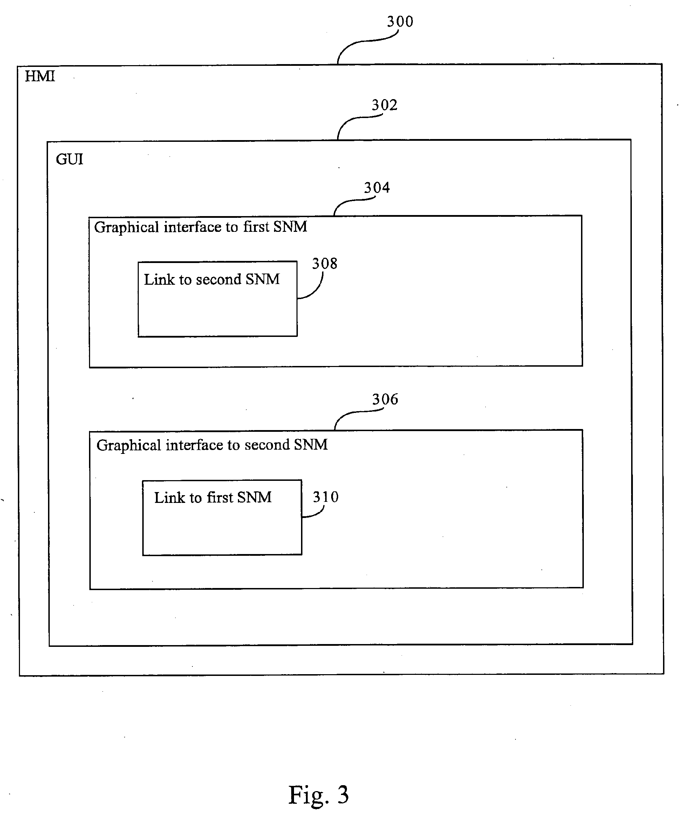

Fig. 3 shows a block diagram of a human-machine-interface 300 (HMI). The human-machine-interface 300 is accessible by an operator or a supervisor of the communication system. The human-machine-interface 300 comprises a graphical user interface (GUI) 302 in which a graphical user interface for the first subnetwork manager 304 is visualized. Additionally, a graphical user interface for the second subnetwork manager 306 is visualized within the graphical user interface 302. After the first identifier has been used to configure and to register the first component at the second subnetwork manager and after the second identifier has been used to configure and to register the second component at the first subnetwork manager, the operator is able to access the graphical user interface for the second subnetwork manager 306 via the graphical user interface for the first subnetwork manager 304 and vice versa. In the embodiment shown here, a link 308 to the second SNM becomes visible at the graphical user interface for the first subnetwork manager 304. By clicking on the link 308, the operator switches from graphical user interface for the first subnetwork manager 304 to graphical user interface for the second subnetwork manager 306. Furthermore, a link 310 to the first SNM becomes visible at the graphical user interface for the second subnetwork manager 306. By clicking on the link 310, the operator switches from graphical user interface for the second subnetwork manager 304 to graphical user interface for the first subnetwork manager 304. Fig. 3 is to be seen as an example of how the usage of the method in accordance with the invention facilitates the navigation between the GUI 304 of first subnetwork manager and the GUI 306 of the second subnetwork manager. Fig. 3 is not to be seen as limiting the scope of the invention.

The human-machine-interface 300 can for example be part of an operation and maintenance center (OMC) of a communication network. An OMC is a center unit of a communication network, e.g. a telecommunications network, and is for example used to manage/ configure / supervise / the communication network. The GUI 302 relates then to the graphical user interface 302 of an OMC. The graphical interfaces 304 and 306 correspond then to interfaces within the GUI 302 by which the corresponding Node-B-SNM and RNC-SNM are accessible by the operator. Due to the automatic configuration of the corresponding SNM with the identifiers of the corresponding Node-B and RNC, the operator is able to switch from the interface for the Node-B SNM to the interface for the RNC-SNM and vice versa.

**List of Reference Numerals**

| | |
|---|---|
| 100 | Communication network |
| 102 | First component |
| 104 | Second component |
| 106 | Computer system |
| 108 | Computer system |
| 110 | Storage device |
| 112 | Microprocessor |
| 114 | Storage device |
| 116 | Microprocessor |
| 118 | First subnetwork manager |
| 120 | Second subnetwork manager |
| 122 | First computer program product |
| 124 | Second computer program product |
| 126 | First message |
| 128 | Second message |
| 130 | First identifier |
| 132 | Second identifier |
| 134 | Interface |
| 136 | Interface |
| 138 | Interface |
| 200 | Flow diagram |
| 300 | Human-machine-interface |
| 302 | Graphical user interface |
| 304 | Graphical user interface |
| 306 | Graphical user interface |
| 308 | Link to second SNM |
| 310 | Link to first SNM |

## Claims

1. A method of interconnecting a first component (102) and a second component (104) of a communication network (100), said first component (102) being associated with a first subnetwork manager (118), said second component (104) being associated with a second subnetwork manager (120), said method comprising the steps of:
- sending a first message (126) from said first subnetwork manager (118) to said second subnetwork manager (120), said first message (126) comprising a first identifier (130), said first component (122) being identifiable by said first identifier (130);
- receiving a second message (128) from said second subnetwork manager (120) at said first subnetwork manager (118), said second message (128) comprising a second identifier (132), said second component (104) being identifiable by said second identifier (132);
- configuring said first subnetwork manager (118) with said second identifier (132).

2. The method of claim 1, said method further comprising using said second identifier (132) for further communication with said second subnetwork manager (120).

3. The method of claim 1 or 2, wherein said first message (126) and said second message (128) are exchanged between said first subnetwork manager (118) and said second subnetwork manager (120) via said first component (102) and said second component (104), said first subnetwork manager (118) being connected to said first component by an interface (136), said second subnetwork manager (120) being connected to said second component (104) by an interface (138), said first component (102) and said second component (104) being connected by a standardized interface (134).

4. The method of claim 1, 2 or 3, said method further comprising sending a third message in response to the reception of the second message (128) from said first subnetwork manager (118) to said second subnetwork manager (120).

5. The method of any one of the preceding claims, wherein said first, second and third messages are Node-B application part (NBAP) messages over lub.

6. The method of any one of the preceding claims, wherein said first component (102) is a Node-B, wherein said second component (104) is a radio network controller (RNC), and wherein said communication network (100) is a universal mobile telecommunications network.

7. The method of any one of claims 1 to 4, wherein the said first component (102) is a base station, and wherein said second component (104) is a Wimax access controller of a communication network employing the Wimax Forum standard.

8. A communication network (100) comprising:
- a first component (102) and a second component (104);
- a first subnetwork manager (118), said first subnetwork manager (118) being associated with said first component (102);
- a second subnetwork manager (120), said second subnetwork manager (120) being associated with said second component (104);
- means for sending a first message (126) from said first subnetwork manager (118) to said second subnetwork manager (120), said first message (120) comprising a first identifier (130), said first component being identifiable by a said first identifier (130);
- means for receiving a second message (128) from said second subnetwork manager (120) at said first subnetwork manager (118), said second message (128) comprising a second identifier (132), said second component (104) being identifiable by said second identifier (134);
- means for receiving said first message (130);
- means for sending said second message (128);
- means for configuring said first subnetwork manager (118) with said second identifier (132);
- means for configuring said second subnetwork manager (120) with said first identifier (130).

9. A communication network component (102), said communication network component comprising:
- a first subnetwork manager (118);
- means for sending a first message (126) to a second communication network component (104), said first message (126) comprising a first identifier (130), said communication network component (102) being identifiable by said first identifier (130);
- means for receiving a second message (128) from said second communication network component (104), said second message (128) comprising a second identifier (132), said second communication network component (104) being identifiable by said second identifier (134);
- means for configuring said first subnetwork manager (118) with said second identifier (132).

10. A computer program product comprising computer executable instructions, said instructions being adapted to performing the steps of:
- sending a first message from a first subnetwork manager of a first component of a communication network to a second subnetwork manager of a second component of said communication network, said first message comprising a first identifier, said first component being identifiable by said first identifier;
- receiving a second message from said second subnetwork manager at said first subnetwork manager, said second message comprising a second identifier, said second component being identifiable by a said second identifier;
- configuring said first subnetwork manager with said second identifier.
